# EUROPÄISCHE PATENTSCHRIFT

(11) **EP 1 213 527 B1**
(45) Veröffentlichungstag und Bekanntmachung des Hinweises auf die Patenterteilung: **05.09.2007**
(21) Anmeldenummer: 01128797.6
(22) Anmeldetag: 04.12.2001
(51) Int. Cl.: F16L 59/14

(54) **Vorrichtung zur Isolation von Mehrfachrohrleitungen**
Device for the insulation of multiple pipes
Dispositif pour l'isolation de tubes multiples

(30) Priorität: 05.12.2000 DE 20020563 U
(43) Veröffentlichungstag der Anmeldung: 12.06.2002
(73) Patentinhaber: Baumann, Roland, Dipl.-Ing., 89134 Blaustein (DE)
(72) Erfinder: Baumann, Roland, Dipl.-Ing., 89134 Blaustein (DE)
(74) Vertreter: Lorenz, Werner

(56) Entgegenhaltungen:
- EP-A- 0 670 451
- DE-A- 3 237 345
- GB-A- 1 238 022
- GB-A- 1 517 757
- US-A- 2 532 587
- US-A- 3 934 615
- US-A- 4 653 541
- US-A- 5 284 204
- US-A- 5 782 301

## Beschreibung

Die Erfindung betrifft eine Mehrfachrohrleitung, insbesondere eine Doppelrohrleitung, mit wenigstens zwei Rohrleitungen, nach der im Oberbegriff von Anspruch 1 näher definierten Art.

Eine Mehrfachrohrleitung gemäß dem Oberbegriff von Anspruch 1 ist aus der US 2,532,587 bekannt. Dabei sind die beiden Leitungen von einem thermischen Isolationsmaterial, einer das Isolationsmaterial umgebenden Schicht und einer Asphalthülle, die von einem Gehäuse umschlossen ist, umgeben. Diese Mehrfachrohrleitung ist jedoch sehr aufwändig herzustellen und kann nur äußerst unflexibel eingesetzt werden.

Eine Rohrleitung für einen Fernheizkanal ist in der DE 32 37 345 A1 beschrieben. Diese Rohrleitung weist allerdings eine sehr aufwändige Konstruktion auf und kann, wie auch die Rohrleitung gemäß der US 2,532,587, nicht in die einzelnen Leitungen aufgeteilt werden.

Aus der EP 0 670 451 A2 ist eine Mehrrohranordnung bekannt, bei welcher zwei Stahlrohre von einem PUR-Schaum und einer weiteren Ummantelung sowie einem Mantelrohr aus HPDE umgeben ist.

Eine Doppelrohrleitung, deren Rohre aufgeteilt werden können, ist in der GB 1 517 757 beschrieben. Problematisch ist hierbei der geringe Schutz der einzelnen Leitungen sowie die nur mäßige Verlegbarkeit derselben.

Die in der US 3,934,615 beschriebene Doppelrohrleitung kann zwar in zwei unabhängige Rohrleitungen zerlegt werden, diese sind jedoch nur entweder vollkommen unabhängig voneinander oder gemeinsam miteinander verlegbar.

Aus der DE 296 17 936 U1 ist eine flexible Mehrfachrohrleitung bekannt, welche insbesondere zur Verrohrung von Solaranlagen dienen soll und welche mindestens zwei flexible Rohrleitungen aufweist, welche mit einem Wärmedämmaterial gegeneinander und gegenüber der Umgebung isoliert sind. In der bevorzugten Ausführungsform ist das Isolationsmaterial für diese flexible Mehrfachrohrleitung dabei als Isolationsschlauch mit einer wenigstens annähernd ovalen Außenform ausgeführt, welcher Öffnungen für die wenigstens zwei Leitungen des Mehrfachrohrleitungs-Systems aufweist.

In der US 5,284,204 ist ein Aufbau beschrieben, welcher ein Rohrleistungssystem zeigt, bei dem zwei Rohrleitungselemente aus einem flexiblen Kunststoffmaterial von einer Isolationsschicht umgeben werden, wobei diese Isolationsschicht, ein einfacher Isolationsschaum, dann von einer äußeren wasserundurchlässigen Schutzschicht ummantelt wird.

Diese Rohrleitungssysteme sind sinnvoll, wenn zwei Leitungen, beispielsweise ein Vorlauf und ein Rücklauf über längere Strecken nebeneinander verlegt werden müssen. Es führt jedoch zu erheblichen Problemen und zu einer Beschädigung des wärmedämmenden Materials, wenn die Rohrleitungen, beispielsweise um die Anschlusspunkte eines Speichers, einer Pumpe oder dergleichen zu erreichen, aufgeteilt werden müssen.

Dieser Problematik nimmt sich die DE 299 23 057 U1 an, in welcher ein Leitungssystem zur Verrohrung von Anlagenkomponenten im Bereich der Heizungstechnik beschrieben ist. Die über den größten Teil ihrer Länge zu einem Doppelrohrsystem zusammengefassten Rohrleitungen werden im Bereich ihrer Enden in zwei jeweils eigenständig isolierte Einzelrohrleitungen aufgeteilt, welche dann problemlos auch zu weiter voneinander entfernt liegenden Anschlusspunkten eines Speichers oder anderer Anlagenkomponenten geführt werden können.

Auch hier liegt die Problematik insbesondere im komplizierten Handling und in der Gefahr einer Verletzung der Isolationsschicht. Dies könnte insbesondere zu einem Eindringen von Feuchtigkeit in die Isolationsschicht führen und damit deren Isolationswirkung gravierend verschlechtern. Außerdem sind derartige Systeme für den Einsatz auf einer Baustelle häufig nicht ausreichend flexibel im Handling, da hier auf Gegebenheiten, wie z.B. Hindernisse, geänderte Anschlussmasse oder dergleichen, reagiert werden muss, welche häufig nicht vorhersehbar sind.

Es ist daher die Aufgabe der Erfindung, eine Mehrfachrohrleitung, insbesondere eine Doppelrohrleitung, zu schaffen, welche eine einfache Bedienung erlaubt und dabei ohne weitere Maßnahmen zum Schutz der Isolation sehr flexibel einsetzbar ist.

Erfindungsgemäß wird diese Aufgabe durch die in Anspruch 1 genannten Merkmale gelöst.

Die erfindungsgemäße Mehrfachrohrleitung bietet den enormen Vorteil, dass sie in der oben beschriebenen Art insbesondere mit - prinzipiell jedoch auch ohne - Rohrleitungen hergestellt und vertrieben werden kann. Insbesondere beim Vertrieb der erfindungsgemäßen Vorrichtung zur Isolation von Mehrfachrohrleitungen mit den Rohrleitungen, welche dann in einer besonders günstigen Ausführungsform flexible Rohrleitungen, wie beispielsweise Wellrohrleitungen, sein können, entsteht ein Mehrfachrohrleitungssystem, welches einfach, schnell und hochflexibel zur Verrohrung von Anlagen, insbesondere von Anlagen aus dem Bereich der Heizungstechnik, wie beispielsweise Heizkessel, Speichertanks, Solaranlagen oder dergleichen, eingesetzt werden kann.

Dabei erhält man ein kompaktes Leitungssystem mit mehreren Rohrleitungen, insbesondere zwei Rohrleitungen. Dieses Leitungssystem, die Leitungen können in bevorzugter Weise als Vorlauf- und Rücklaufleitungen dienen, ist ein sehr kompaktes, einfach zu handhabendes System. Dabei kann das Mehrfachrohrleitungssystem grundlegend auch nur eine isolierte Rohrleitung mit dem Mantel aus Isolationsmaterial aufweisen, in diesem speziellen Fall beispielsweise der Vorlauf, und eine über die Außenhülle daran angebundene unisolierte Leitung als Rücklauf.

Aufgrund der Ausführung der bzw. des Mantels der Rohrleitungen aus dem Isolationsmaterial kann erreicht werden, dass die Rohrleitungen dichter als bei der Verwendung von zwei einzelnen, unabhängig voneinander isolierten Rohrleitungen nebeneinander angeordnet werden können. Wie schon bei Doppelrohrsystemen, wie sie im oben genannten Stand der Technik beschrieben sind, beeinflussen sich die Rohre gegenseitig, so dass trotz der Verwendung des in Richtung des benachbarten Rohres im allgemeinen dünner ausgebildeten Mantels aus Isolationsmaterial, als dieser in den anderen Bereichen ausgeführt ist, dennoch eine Isolation, welche den Erfordernissen der Wärmeschutzverordnung oder anderer Normen und Richtlinien gerecht wird, realisiert ist.

Außerdem ist das System hochgradig flexibel, da durch ein Auftrennen der Außenhülle, beispielsweise in den Endbereichen, der Anschluss der Rohrleitungen an um einen größeren Betrag entfernt voneinander liegenden Anschlusselementen ermöglicht wird. Die jeweilige Rohrleitung bleibt ohne zusätzliche Isolationsarbeiten, wie ein Ankleben, Umwickeln oder dergleichen, was auf einer Baustelle einen sehr hohen Zeitaufwand darstellen würde, bis in den Bereich des Anschlusses isoliert.

Ein weiterer Vorteil der erfindungsgemäßen Mehrfachrohrleitung liegt darin, dass die Leitungen auch in anderen Teilbereichen ihrer verlegten Länge aufgetrennt werden können, so dass es beispielsweise möglich ist, diese einfach um Verankerungen anderer Rohrleitungen, Anlagenkomponenten oder Hindernisse anderer Art, herum verlegt werden können. Die Außenhülle muss dabei, sofern es das Hindernis zulässt, lediglich in diesem Bereich aufgetrennt werden und die Rohre der Mehrfachrohrleitung können nach dem Umlaufen des Hindernisses wieder in dem durch die Außenhülle zusammengefassten Paket weitergeführt werden.

Grundlegend kann sich der Aufbau der Isolation, also des Mantels, jeder einzelnen der Rohrleitung über deren Länge verändern. Es kann beispielsweise unmittelbar nach einem Solarkollektor oder dergleichen ein anderes, beispielsweise temperaturbeständigeres Isolationsmaterial eingesetzt werden, welches sich dann über die Länge der Rohrleitung zu einem anderen Isolationsmaterial verändert. Auch kann hierbei entsprechend vorgesehen sein, dass die jeweilige Schutzhülle bzw. Schutzschicht nur in bestimmten Teilbereichen angeordnet ist, beispielsweise wenn vorhersehbar ist, dass nur bestimmte Teilbereiche der Leitung entsprechend hohen Temperaturen, UV-Strahlungen oder dergleichen ausgesetzt sind.

Die erfindungsgemäße Mehrfachrohrleitung ermöglicht deshalb einen schnellen und unkomplizierten Einsatz vor Ort auf einer Baustelle, sowohl bei Neubauten als auch bei Renovierungsmaßnahmen durch den Fachmann oder gegebenenfalls auch durch einen Heimwerker, wobei hier keine zusätzlichen Isolationsmaßnahmen oder Verklebungen einzelner Isolationsteile zueinander erforderlich sind. Dies kann zu erheblichen Kosteneinsparungen aufgrund des geringeren Zeitaufwands und des Erfordernisses von weniger gut qualifiziertem Fachpersonal führen.

Erfindungsgemäß ist des weiteren vorgesehen, dass die Außenhülle derart auftrennbar ist, dass die wenigstens zwei Rohrleitungen unabhängig voneinander verlegbar sind.

Dadurch ergibt sich eine Mehrfachrohrleitung, welche eine sehr kompakte Form erhält und zu einer kompakten harmonischen Einheit zusammengefügt werden kann. Die jeweils den benachbarten Rohrleitungen zugewandten Bereiche der in der Art von zwei halben Ovalen ausgeführten Mäntel sind dabei abgeflachte, wenigstens annähernd ebene Flächen.

Bei einer Unterputzverlegung kann das Rohrleitungssystem dann auch in der Art aufgetrennt werden, dass es mit den abgeflachten Seiten, welche bei bestimmungsgemäßen Einsatz jeweils der benachbarten Rohrleitung zugewandt wären, gegen eine ohnehin isolierte Außenwand gelegt wird, so dass eine vergleichsweise kleine Höhe entsteht, auf welcher der Putz dann über dem Rohr aufgetragen werden muss. Damit sind erhebliche Einsparungen an Material, insbesondere an Verkleidungsmaterial und Putz, bei der Verlegung der Rohrleitungen an einem Rohbau möglich.

In einer weiteren sehr günstigen Ausführungsform der Erfindung ist die Vorrichtung zur Isolation von Mehrfachrohrleitungen durch eine wenigstens annähernd ovale Form gekennzeichnet.

Diese im über die Außenhülle zusammengefassten Zustand wenigstens annähernd ovale Form ist dabei so ausgeführt, wie dies von einstückigen Ausführungen gemäß dem Stand der Technik an sich bekannt ist. Insbesondere bei dieser Ausführungsform treten die Vorteile der in dem Bereich, der jeweils der anderen Rohrleitung zugewandt ist, dünneren Isolationsschicht auf, so dass hier Material und Bauraum eingespart werden kann, ohne die Erfordernisse der Wärmeschutzverordnung oder anderer Normen und Richtlinien zu verletzen.

Außerdem können durch die unveränderte Außenform an sich bekannte Halterungen, Kanäle oder dergleichen weiterhin genutzt werden.

In einer weiteren besonders günstigen Ausgestaltung der Erfindung wird EPDM-Kautschuk eingesetzt, um das Isolationsmaterial der Mäntel der jeweiligen Rohrleitungen zu realisieren.

Dieses Material bietet insbesondere beim Einsatz in Solaranlagen enorme Vorteile, da es für ein Isolationsmaterial vergleichsweise hohe Temperaturen aushält und dabei sowohl UV-beständig als auch wasserdampfdiffusionsdicht ausgebildet ist. Daneben bietet es hervorragende Isolationseigenschaften, was insbesondere zusammen mit der oben beschriebenen, wenigstens annähernd ovalen Ausführung der Vorrichtung zur Isolation von Mehrfachrohrleitungen einen vergleichsweise kleinen und kompakten Aufbau erlaubt. Neben der Einsparung von Material kann dieser vor allem bei der Unterputzverlegung und dergleichen aus Gründen der Bauraumeinsparung von Vorteil sein.

In einer weiteren sehr günstigen Ausführungsform ist die Schutzschicht der jeweiligen Mäntel aus Isolationsmaterial dabei als eigenständige Schutzhülle, beispielsweise aus einem Polyethylenmaterial, ausgeführt.

Dies ermöglicht vor allem dann Vorteile wenn die Rohrleitungen voneinander getrennt über größere Längen verlegt werden, da die Schutzhülle sie dann sowohl vor mechanischen Beschädigungen als auch vor Beschädigungen durch UV-Strahlung zu schützen vermag.

In einer weiteren sehr günstigen, alternativen Ausgestaltung der Erfindung kann die Schutzschicht jedoch auch einstückig mit dem jeweils monolithisch ausgeführten Mantel, aus dem Isolationsmaterial für jede der Rohrleitungen ausgeführt sein.

Dies kann beispielsweise eine bei der Fertigung des Isolationsmaterials erzeugte wenigstens annähernd porenfreie Abschlussschicht sein, die sicherstellt dass keine Feuchtigkeit und kein Wasserdampf in den Mantel eindringen bzw. eindiffundieren kann.

Prinzipiell ist es hier durchaus denkbar, dass die Schutzschicht zusätzlich nochmals von der Schutzhülle umgeben ist.

In einer sehr vorteilhaften Ausgestaltung der Erfindung kann dabei die Außenhülle und/oder wenigstens eine der Schutzhüllen jeweils aus einem Gewebe ausgebildet sein. Ein derartiges Gewebe besteht z.B. Kunststoffasern, wobei Materialien wie Polyamid, PVC, Polyester oder Polypropylen sicherlich als die bevorzugten Faserwerkstoffe anzusehen sind. Zusätzlich zu diesen oben genannten Kunststoffasern sind grundsätzlich auch Faserwerkstoffe aus metallischen Fasern denkbar, deren Vorteile insbesondere in der unten noch angesprochenen mechanischen Belastbarkeit liegt. Grundsätzlich ist auch eine Kombination des Gewebes aus Kunststoff- und Metallfasern denkbar.

Die Vorteile von derartigen Geweben liegen darin, dass diese mechanisch sehr hoch beanspruchbar sind und somit einen guten Schutz gegen Beschädigungen oder dergleichen bilden. Durch die geeigneten Materialien ist ein Schutz vor UV-Strahlung auch bei dem Hüllen aus dem Gewebe aus Kunststoffasern problemlos möglich.

Ein weiterer Vorteil liegt in der Eigenschaft von Geweben an sich. Geweben neigen nämlich bei entsprechenden Biegungen in der Doppelrohrleitung nicht so stark zu einem Faltenwurf, wie dies vergleichbare Folien tun würden. Das Verlegen wird damit vereinfacht und die Faltenbildung, welche immer als möglicher Angriffspunkt für Beschädigungen zu sehen ist, wird drastisch reduziert.

Eine weitere Ausgestaltung der erfindungsgemäßen Lösung sieht vor, dass in die erfindungsgemäße Vorrichtung zur Isolation von Mehrfachrohrleitungen wenigstens ein Kabel integriert ist.

Dieses elektrische Kabel kann dabei als Sensorleitung, beispielsweise für Temperatursensoren dienen, es kann jedoch auch als Steuerleitung, beispielsweise für eine Solarpumpe oder dergleichen genutzt werden. In einer sehr einfachen und günstigen Ausführungsform kann das Kabel dabei zusammen mit den mit ihrer Schutzschicht versehenen Mänteln der jeweiligen Rohrleitungen unter der Außenhülle integriert sein.

Es ist in einer weiteren Ausführungsform jedoch auch denkbar, dass das wenigstens eine Kabel in den Mantel wenigstens einer der beiden Rohrleitungen integriert wird. Dies kann beispielsweise zwischen dem Mantel und dessen Schutzhülle erfolgen, sofern dieser in einer zweistückigen Art aufgebaut ist. Es ist jedoch auch denkbar, dass das Kabel in einer Kerbe direkt entlang der Rohrleitung in dem jeweiligen Mantel verläuft.

In einer Ausführungsform der Erfindung mit einem Sensorkabel kann es dabei sinnvoll sein, über eine Kerbe oder zumindest eine oder mehrere Fasen Platz für das jeweilige Kabel zu schaffen, so dass es zu keiner die Isolationswirkung verringernden Deformation des Isolationsmaterials des jeweiligen Mantels kommt.

Weitere vorteilhafte Ausgestaltungen der Erfindung ergeben sich aus den restlichen Unteransprüchen und dem anhand der Zeichnung nachfolgend dargestellten Ausführungsbeispiel.

Es zeigt:
- Fig. 1: ein Teil der erfindungsgemäßen Vorrichtung zur Isolation von Mehrfachrohrleitungen in einer Draufsicht;
- Fig. 2: einen Querschnitt durch die erfindungsgemäße Vorrichtung zur Isolation von Mehrfachrohrleitungen gemäß der Linie II-II Fig. 1;
- Fig. 3: ein Querschnitt vergleichbar zu Fig. 2 mit integriertem elektrischen Kabel;
- Fig. 4: eine prinzipmäßige Darstellung einer weiteren alternativen Ausführungsform eines möglichen Querschnitts der Mehrfachrohrleitung;
- Fig. 5: eine prinzipmäßige Darstellung einer weiteren alternativen Ausführungsform eines möglichen Querschnitts der Mehrfachrohrleitung;
- Fig. 6: eine prinzipmäßige Darstellung einer weiteren alternativen Ausführungsform eines möglichen Querschnitts der Mehrfachrohrleitung; und
- Fig. 7 eine: Darstellungen der Ausführungsform des möglichen Querschnitts gemäß Fig. 4 in einer gedrehten Montageform.

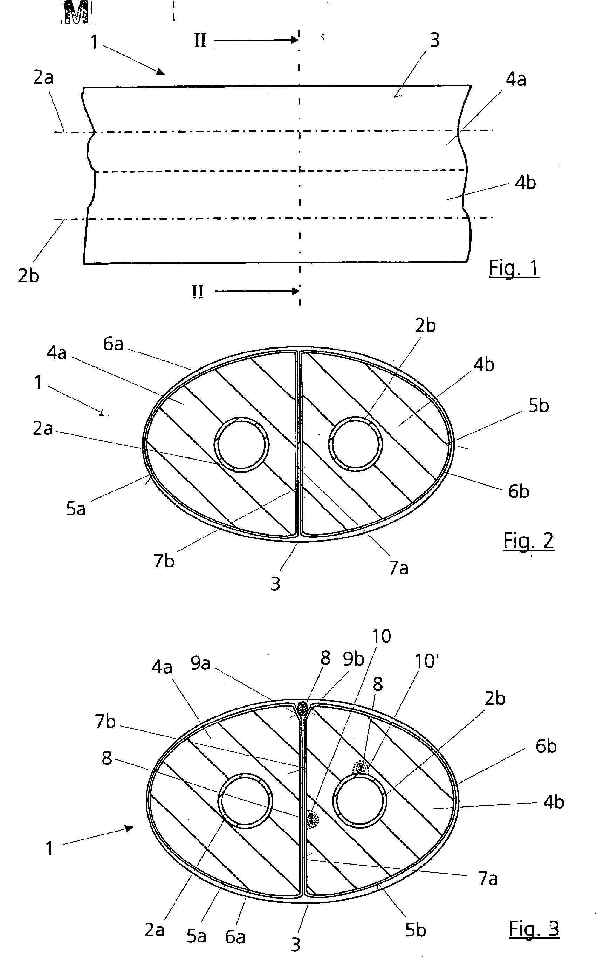

In Fig. 1 ist eine Vorrichtung 1 zur Isolation von Mehrfachrohrleitungen bzw. ein Isolationssystem 1 in einer Draufsicht erkennbar. Bei dem hier dargestellten Ausführungsbeispiel handelt es sich dabei um die bevorzugte Ausführungsform als Doppelrohrsystem, wobei die beiden Rohrleitungen 2a, 2b nur durch ihre Mittellinien prinzipmäßig angedeutet sind. Die Draufsicht gemäß Fig. 1 zeigt prinzipiell nur eine Außenhülle 3, welche zwei die jeweiligen Rohrleitungen 2a, 2b umgebende Mäntel 4a, 4b zu dem Isolationssystem 1 zusammenfasst.

In dem Querschnitt gemäß Fig. 2 ist der Aufbau des Isolationssystems 1 mit den beiden Rohrleitungen 2a, 2b besser erkennbar. Die beiden Mäntel 4a, 4b, grundlegend wäre es jedoch auch denkbar, dass nur eine der Rohrleitungen einen Mantel 4a, 4b hat, umgeben die Rohrleitungen 2a, 2b. Die Mäntel 4a, 4b sind aus einem Isolationsmaterial ausgeführt. Dieses Material sollte die für Isolationsmaterialien üblichen Eigenschaften aufweisen.

In einer besonders günstigen Ausführung kann es sich bei diesem Material um einen EPDM-Kautschuk oder einen synthetischen Kautschuk mit vergleichbaren Materialeigenschaften handeln, welcher neben einer sehr geringen Wärmeleitfähigkeit auch sehr gute Verträglichkeit gegenüber hohen Temperaturen aufweist. Außerdem ist dieses Material wasserdampfdiffusionsdicht. Grundlegend sind jedoch auch andere Isolationsmaterialien, beispielsweise aus Polyethylen, Mineralwolle, Steinwolle, Glasfasern oder anderen Materialien denkbar.

Außerdem ist es möglich, dass die Mäntel 4a, 4b oder zumindest einer der Mäntel 4a, 4b dabei über die Länge der Rohrleitung 2a, 2b, welche von ihm isoliert wird, aus verschiedenen Materialien besteht. Beispielsweise beim Einsatz der Verrohrung von Solaranlagen kann es sinnvoll sein, im Bereich unmittelbar nach der Solaranlage einen Dämmstoff einzusetzen, welcher eine über entsprechende bessere Temperaturbeständigkeit verfügt als der Dämmstoff im Bereich der Verrohrung mit einem Speicher oder dergleichen.

Die beiden Mäntel 4a, 4b sind dabei einstückig monolithisch ausgeführt und können jeweils über eine direkt auf das Material aufgebrachte oder aus dem Material bestehende Schutzschicht 5a, 5b verfügen. In dem hier dargestellten Ausführungsbeispiel ist jedoch, anstatt oder zusätzlich zu dieser Schutzschicht, jeweils eine Schutzhülle 6a, 6b um jeden der monolithisch aufgebauten Mäntel 4a, 4b aus dem Isolationsmaterial ausgeführt.

Diese Schutzhüllen 6a, 6b können, wie auch die Außenhülle 3, aus einem Polyethylen (PE)- oder Polyvinylchlorid (PVC)-Material ausgeführt sein. Dieses Material ermöglicht bei geringen Kosten und geringem Gewicht einen vergleichsweisen guten mechanischen Schutz sowie einen hervorragenden Schutz gegen UV-Strahlung.

Insbesondere um einen mechanischen Schutz durch die Schutzhülle 6a, 6b bzw. die Außenhülle 3 zu verbessern, kann diese auch aus einem Gewebe bestehen. Dieses Gewebe, welches insbesondere bei relativ engen Biegungen sehr günstig ist, da ein Gewebe nicht so stark zum Faltenwurf neigt wie ein Folienmaterial, kann aus entsprechenden Kunststoffasern und/oder Metallfasern bestehen.

Das Isolationssystem 1 ist als zweigeteiltes Doppelrohrsystem ausgeführt. Durch die der jeweils benachbarten Rohrleitungen 2a, 2b zugewandte Abflachung 7b, 7a, der jeweiligen Mäntel 4a, 4b aus dem Isolationsmaterial kann ein sehr kompakter Aufbau erzielt werden, welcher, obwohl zwischen der Rohrleitung und der Abflachung das Isolationsmaterial mit einer geringeren Schichtstärke als dies in den anderen Bereichen der Fall ist, ausgeführt ist, eine sehr gute Isolationseigenschaft liefert und der Wärmeschutzverordnung oder anderen Normen und Richtlinien genügt.

Fig. 3 zeigt einen alternativen Aufbau, welcher prinzipiell dem in Fig. 2 erklärten Aufbau entspricht. Dabei ist lediglich ein elektrisches Kabel 8, welches beispielsweise als Sensorleitung, Steuerleitung oder dergleichen dienen kann, in das Isolationssystem 1 integriert. In der hier dargestellten Ausführungsform erfolgt diese Integration in das Isolationssystem 1 indem das Kabel 8 unter die Außenhülle 3 eingebracht wird. Die beiden Mäntel 4a, 4b weisen dabei an einem Ende der jeweiligen Abflachungen 7a, 7b jeweils eine Fase 9a, 9b auf, so dass hier Raum für das elektrische Kabel 8 entsteht.

Prinzipiell sind jedoch auch andere Ausführungsformen, wie beispielsweise mit den gestrichelt angedeuteten Kerben 10, 10' denkbar, welche Raum zur Aufnahme des elektrischen Kabels schaffen. Im Falle der gestrichelt angedeuteten Kerben 10, 10' wäre das Kabel dabei sogar unter der jeweiligen Schutzhülle 6a, 6b angeordnet, so dass es im Falle der Aufsplittung der beiden Mäntel 4a, 4b bzw. der beiden Rohrleitungen 2a, 2b mit jeweils einer der Leitungen weiter verlaufen würde und somit keine zusätzliche Befestigung an einer der Rohrleitungen erforderlich machen würde.

Insbesondere bei der gestrichelt angedeuteten Kerbe 10' wäre jedoch darauf zu achten, dass die Anlage dann nur für entsprechende Materialien oder Anwendungsformen eingesetzt werden kann, welche eine zu hohe Temperaturbelastung des elektrischen Kabels 8, welches dann an dieser Kerbe 10' zu liegen käme, vermeidet.

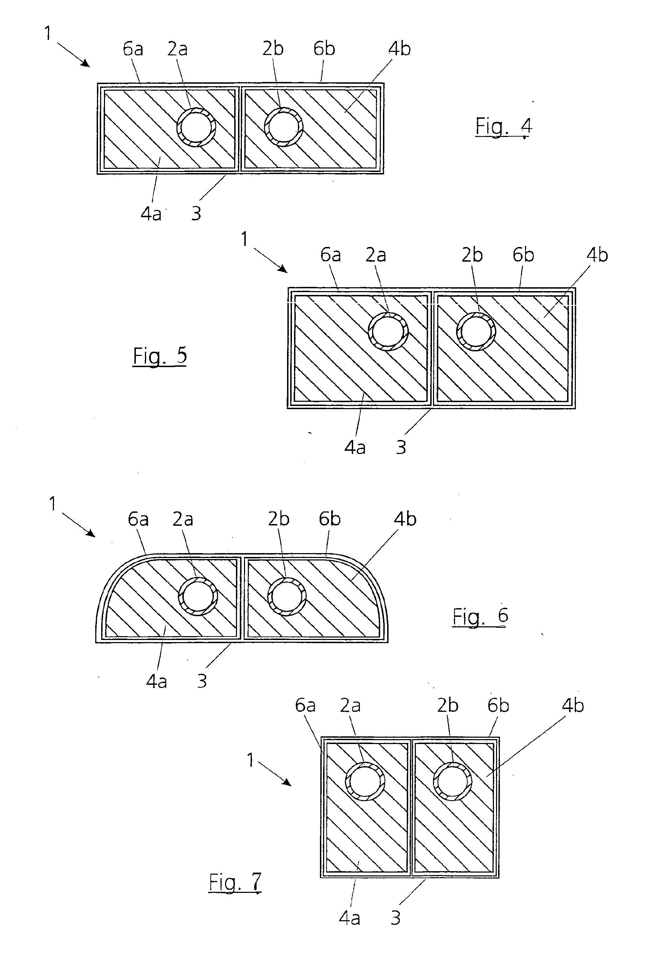

In Fig. 4 ist eine weitere alternative Ausführungsform dargestellt, bei der wiederum beide Rohrleitungen 2a, 2b jeweils in einem Mantel 4a, 4b aus dem Isolationsmaterial angeordnet sind. Der Aufbau ist dabei identisch dem Aufbau in Fig. 2 zu verstehen, wobei sich hier lediglich die Form der Mäntel 4a, 4b in ihrem Querschnitt von dem in Fig. 2 dargestellten Querschnitt unterscheidet. Durch den rechteckigen Querschnitt der beiden Mäntel 4a, 4b ergeben sich entsprechende Vorteile bei der Verarbeitung des Isolationssystems 1. Das Isolationssystem 1 kann beispielsweise unter Putz verlegt werden, ohne dass sich durch die ovale Querschnittsform des gesamten Isolationssystems 1 Schwierigkeiten bei der Einbettung in den Putz ergeben, welche aus Hohlräumen zwischen einer Trägerfläche und dem dort nur punktuell oder auf einer kleinen Fläche aufliegenden ovalen Isolationssystems 1 ergeben können.

Fig. 5 zeigt einen vergleichbaren Aufbau, wobei hier nicht nur die in Fig. 4 dargestellte Asymmetrie aufgrund der einander zugewandten Rohrleitungen in dem Isolationsmaterial gegeben ist, sondern dass hier auch eine weitere Asymmetrie in einer in der Zeichnung nach unten dargestellten Richtung auffällt. Dieses System ist beispielsweise sehr gut geeignet, um im Bereich eines Fußbodens im Estrich verlegt zu werden. Gegenüber die im allgemeinen nicht gedämmten Bereiche des Fußbodens, beispielsweise einer Kellerdecke oder dergleichen, ist die Isolationsschicht entsprechend dicker ausgeführt. Je nach eingesetztem Wärmedurchgangswert λ, beispielsweise λ = 0,04 oder λ = 0,035, variieren dabei die dünneren und dickeren Bereiche zwischen 6 und 13 mm bzw. 13 und 27 mm, je nach eingesetztem Rohrdurchmesser und eingesetztem Isolationsmaterial für die Mäntel 4a, 4b.

In Fig. 6 ist eine weitere Variante dargestellt, welche prinzipiell die oben bereits beschriebenen Eigenschaften des Isolationssystems gemäß der Fig. 4 aufweist. Lediglich sind hier die in der Zeichnung nach oben gewandten Randbereiche mit einer Rundung ausgeführt. Neben den idealen Vorraussetzungen diesen Aufbau offen auf einer ebenen Wand oder dergleichen zu verlegen, könnte er aber auch unter Putz verlegt werden. Im Bereich, welcher in Fig. 6 in der hier dargestellten Zeichnung nach unten weist, ist die Anlage an einer Wand oder dergleichen, ohne dass eine Lücke entsteht, möglich, während auf der anderen Seite die entstehenden Randbereiche mit dem Putzmaterial aufgefüllt werden könnten.

Fig. 7 zeigt denselben Aufbau wie Fig. 4, wobei die beiden Mäntel 4a, 4b des Isolationssystems 1 hier um jeweils 90° gedreht wurden. Dieser Aufbau wäre ebenfalls geeignet, um im Bereich des Estrichs verlegt zu werden, da er auf der in der Zeichnung nach unten weisenden Seite eine vergleichsweise dicke Isolationsschicht, von beispielsweise 27 mm bei einem λ-Wert von λ = 0,04 aufweist. Die Isolation gegenüber einer ungedämmten Boden- bzw. Deckenplatte wäre so problemlos möglich.

Es ist bei einem derartigen rechteckigen asymmetrischen Aufbau natürlich auch möglich die Mäntel bzw. die Leitungen unterwegs zu drehen, so dass bei der Verlegung auf sich ändernde Umgebungen, beispielsweise beim Übergang von der Verlegung an einer isolierten Wand zur Verlegung an einem unisolierten Bodenbereich reagiert werden kann. Da sich bei der rechteckigen Form der Mäntel 4a,4b ohnehin definitionsgemäß mehrere Abfalchungen finden ist die erneute Anlage der Mäntel aneinander kein Problem.

Bei den Ausführungen, welche für die Verlegung unter Putz oder im Bereich des Estrichs vorgesehen sind, ist es dabei besonders günstig, wenn die Schutzhülle 3 einen sehr stabilen Aufbau, insbesondere einen Fasern oder einen ein Gewebe aufweisenden Aufbau hat, da dieser gegen mechanische Beschädigungen, welche beim Einbetten in Putz oder Estrich auftreten könnten, ausreichend stabil ist.

Prinzipiell kann das beschriebene Isolationssystem 1 für die Isolation verschiedenartiger Rohrleitungen bei verschiedenen Durchmessern eingesetzt werden. Eine bevorzugte Ausführungsform würde jedoch den Einsatz zusammen mit flexiblen Rohrleitung, beispielsweise Wellrohrleitungen vorsehen, welche bereits vor dem Vertrieb des Isolationssystems 1 mit diesem zu einer Einheit zusammengefasst wären. Der bevorzugte Einsatz wäre dabei bei der Verrohrung von Anlagen aus dem Bereich der Heizungstechnik, insbesondere bei Solaranlagen, zu sehen.

## Patentansprüche

1. Mehrfachrohrleitung, insbesondere Doppelrohrleitung, mit wenigstens zwei Rohrleitungen (2a,2b), welche jeweils einen Mantel (4a,4b) aus Isolationsmaterial aufweisen, wobei jeder der Mäntel (4a,4b) aus dem Isolationsmaterial zumindest an einem Teil seiner Länge über den gesamten Umfang von einer einteiligen, flexiblen Schutzschicht (5a,5b) und/oder Schutzhülle (6a,6b) umgeben ist, und wobei die einzelnen Rohrleitungen (2a,2b) mittels einer zumindest teilweise entfernbaren Außenhülle (3) zu der Mehrfachrohrleitung zusammengefasst sind,
**dadurch gekennzeichnet, dass** die Rohrleitungen (2a, 2b) durch ihre jeweilige Schutzschicht (5a, 5b) und/oder Schutzhülle (6a, 6b) derart voneinander getrennt sind, dass durch Auftrennen von der Außenhülle (3) die Rohrleitungen (2a, 2b) mit ihren zugehörigen Mänteln (4a, 4b) und ihren zugehörigen Schutzschichten (5a, 5b) und/oder Schutzhüllen (6a, 6b) in zwei voneinander unabhängige Rohrleitungen (2a, 2b) aufteilbar sind die über ihren gesamten Umfang von ihren jeweiligen Mänteln (4a 4b) und ihren zugehörigen Schutzschicht (5a, 5b) und/oder Schutzhülle (6a, 6b) umgeben sind, welche unabhängig voneinander verlegbar sind, und dass die jeweils den benachbarten Rohrleitungen (2a,2b) zugewandten Bereiche der Mäntel (4a,4b) als Abflachungen (7a,7b) ausgebildet sind, so dass eine jeweils wenigstens annähernd formschlüssige Anlage der Mäntel (4a,4b) mit ihren zugehörigen Schutzschichten (5a, 5b) und/oder Schutzhüllen (6a, 6b) aneinander möglich ist.

2. Mehrfachrohrleitung nach Anspruch 1,
**dadurch gekennzeichnet, dass** das Isolationsmaterial aus EPDM-Kautschuk ausgeführt ist.

3. Mehrfachrohrleitung nach Anspruch 1 oder 2,
**dadurch gekennzeichnet, dass** jeder der Mäntel (4a, 4b) an seiner der Außenhülle (3) und/oder den benachbarten Mänteln (4b,4a) zugewandten Oberflächen die Schutzhülle (6a, 6b) aufweist.

4. Mehrfachrohrleitung nach einem der Ansprüche 1 bis 3,
**dadurch gekennzeichnet, dass** die Schutzschicht (5a,5b) einstückig mit dem jeweiligen Mantel (4a,4b) ausgeführt ist.

5. Mehrfachrohrleitung nach Anspruch 3,
**dadurch gekennzeichnet, dass** die Schutzhülle (6a,6b) aus einem Polyethylen (PE)-Material ausgeführt ist.

6. Mehrfachrohrleitung nach Anspruch 3,
**dadurch gekennzeichnet, dass** die Schutzhülle (6a,6b) aus einem Polyvinylchlorid (PVC)-Material ausgeführt ist.

7. Mehrfachrohrleitung nach Anspruch 3,
**dadurch gekennzeichnet, dass** die Schutzhülle (6a,6b) aus einem Gewebe aus Kunststoff- und/oder Metallfasern ausgeführt ist.

8. Mehrfachrohrleitung nach einem der Ansprüche 1 bis 7,
**dadurch gekennzeichnet, dass** die Außenhülle (3) aus einem Polyethylen (PE)-Material ausgeführt ist.

9. Mehrfachrohrleitung nach einem der Ansprüche 1 bis 7,
**dadurch gekennzeichnet, dass** die Außenhülle (3) aus einem Polyvinylchlorid (PVC)-Material ausgeführt ist.

10. Mehrfachrohrleitung nach einem der Ansprüche 1 bis 7,
**dadurch gekennzeichnet, dass** die Außenhülle (3) aus einem Gewebe aus Kunststoff- und/oder Metallfasern ausgeführt ist.

11. Mehrfachrohrleitung nach einem der Ansprüche 1 bis 10,
**dadurch gekennzeichnet, dass** jeder der Mäntel (4a,4b) einstückig fugenlos ausgebildet ist.

12. Mehrfachrohrleitung nach einem der Ansprüche 1 bis 11,
**dadurch gekennzeichnet, dass** die Rohrleitungen (2a,2b) als an sich bekannte flexible Rohrleitungen (2a,2b) ausgebildet sind.

13. Mehrfachrohrleitung nach Anspruch 12,
**dadurch gekennzeichnet, dass** die flexiblen Rohrleitungen (2a,2b) als Ring- oder Spiral-Wellrohre ausgebildet sind.

14. Mehrfachrohrleitung nach einem der Ansprüche 1 bis 13,
**dadurch gekennzeichnet, dass** wenigstens ein elektrisches Kabel (8) in den Bereich zwischen den Rohrleitungen (2a,2b) und der Außenhülle (3) integriert ist.

15. Mehrfachrohrleitung nach Anspruch 14,
**dadurch gekennzeichnet, dass** das wenigstens eine elektrische Kabel (8) direkt unter der Außenhülle (3) angeordnet ist.

16. Mehrfachrohrleitung nach Anspruch 14 oder 15,
**dadurch gekennzeichnet, dass** durch Fasen (9a,9b) oder Kerben (10,10') an wenigstens einem der Mäntel (4a,4b) Raum für das wenigstens eine Kabel (8) geschaffen ist.

17. Mehrfachrohrleitung nach Anspruch 14, 15 oder 16,
**dadurch gekennzeichnet, dass** das wenigstens eine elektrische Kabel (8) zwischen jeweils einer der Rohrleitungen (2a,2b) und deren Schutzhülle (6a,6b) integriert ist.

18. Mehrfachrohrleitung nach einem der Ansprüche 1 bis 17,
**gekennzeichnet durch** eine wenigstens annähernd ovale Form.

19. Mehrfachrohrleitung nach einem der Ansprüche 1 bis 18,
**dadurch gekennzeichnet, dass** jeder der Mäntel (4a,4b) wenigstens annähernd die Form eines halben Ovals aufweist, wobei die Abflachung (7a,7b) in dem der jeweils anderen Rohrleitung (2b,2a) zugewandten Bereich angeordnet ist.

20. Mehrfachrohrleitung nach einem der Ansprüche 1 bis 17,
**dadurch gekennzeichnet, dass** jeder der Mäntel (4a,4b) wenigstens annähernd rechteckig ausgebildet ist.

21. Mehrfachrohrleitung nach Anspruch 20,
**dadurch gekennzeichnet, dass** wenigstens eine der Rohrleitungen (2a,2b) in ihrem Mantel (4a,4b) in einer Position angeordnet ist, welche von dem Mittelpunkt der Querschnittsfläche des Mantels (4a,4b) verschieden ist.

## Claims

1. A multiple pipeline, particularly a double pipeline, having at least two pipelines (2a, 2b) which each have a casing (4a, 4b) of insulating material, each of the casings (4a, 4b) of the insulating material being surrounded along at least part of its length over the entire circumference by a single-part, flexible protective layer (5a, 5b) and/or protective cover (6a, 6b), and the individual pipelines (2a, 2b) being combined to form the multiple pipeline by means of an at least partially removable outer cover (3),
**characterised in that** the pipelines (2a, 2b) are separated from one another by their respective protective layer (5a, 5b) and/or protective cover (6a, 6b) in such a way that, by disconnecting the outer cover (3), the pipelines (2a, 2b) with their associated casings (4a, 4b) and their associated protective layers (5a, 5b) and/or protective covers (6a, 6b) may be divided into two mutually independent pipelines (2a, 2b) which are surrounded over their entire circumference by their respective casings (4a, 4b) and their associated protective layer (5a, 5b) and/or protective cover (6a, 6b), which may be laid independently of one another, and **in that** those regions of the casings (4a, 4b) which face the adjacent pipelines (2a, 2b) in each case are constructed as flat portions (7a, 7b) to enable a respective, at least approximately form-fitting contact between the casings (4a, 4b) with their associated protective layers (5a, 5b) and/or protective covers (6a, 6b).

2. A multiple pipeline according to Claim 1,
**characterised in that** the insulating material is made from EPDM rubber.

3. A multiple pipeline according to Claim 1 or 2,
**characterised in that** each of the casings (4a, 4b) has the protective cover (6a, 6b) on its surfaces facing the outer cover (3) and/or the adjacent casings (4b, 4a).

4. A multiple pipeline according to one of Claims 1 to 3,
**characterised in that** the protective layer (5a, 5b) is constructed in one piece with the respective casing (4a, 4b).

5. A multiple pipeline according to Claim 3,
**characterised in that** the protective cover (6a, 6b) is made from a polyethylene (PE) material.

6. A multiple pipeline according to Claim 3,
**characterised in that** the protective cover (6a, 6b) is made from a polyvinyl chloride (PVC) material.

7. A multiple pipeline according to Claim 3,
**characterised in that** the protective cover (6a, 6b) is made from a fabric of plastics and/or metal fibres.

8. A multiple pipeline according to one of Claims 1 to 7,
**characterised in that** the outer cover (3) is made from a polyethylene (PE) material.

9. A multiple pipeline according to one of Claims 1 to 7,
**characterised in that** the outer cover (3) is made from a polyvinyl chloride (PVC) material.

10. A multiple pipeline according to one of Claims 1 to 7,
**characterised in that** the outer cover (3) is made from a fabric of plastics and/or metal fibres.

11. A multiple pipeline according to one of Claims 1 to 10,
**characterised in that** each of the casings (4a, 4b) is constructed in one piece without a joint.

12. A multiple pipeline according to one of Claims 1 to 11,
**characterised in that** the pipelines (2a, 2b) are constructed as flexible pipelines (2a, 2b) known per se.

13. A multiple pipeline according to Claim 12,
**characterised in that** the flexible pipelines (2a, 2b) are constructed as annular or helical corrugated pipes.

14. A multiple pipeline according to one of Claims 1 to 13,
**characterised in that** at least one electrical cable (8) is integrated in the region between the pipelines (2a, 2b) and the outer cover (3).

15. A multiple pipeline according to Claim 14,
**characterised in that** the at least one electrical cable (8) is arranged directly under the outer cover (3).

16. A multiple pipeline according to Claim 14 or 15,
**characterised in that** space for the at least one cable (8) is created by chamfers (9a, 9b) or notches (10, 10') in at least one of the casings (4a, 4b).

17. A multiple pipeline according to Claim 14, 15 or 16,
**characterised in that** the at least one electrical cable (8) is integrated between one of the pipelines (2a, 2b) in each case and its protective cover (6a, 6b).

18. A multiple pipeline according to one of Claims 1 to 17,
**characterised by** an at least approximately oval shape.

19. A multiple pipeline according to one of Claims 1 to 18,
**characterised in that** each of the casings (4a, 4b) has an at least approximately semi-oval shape, the flat portion (7a, 7b) being arranged in the region facing the other pipeline (2b, 2a) in each case.

20. A multiple pipeline according to one of Claims 1 to 17,
**characterised in that** each of the casings (4a, 4b) is of an least approximately rectangular construction.

21. A multiple pipeline according to Claim 20,
**characterised in that** at least one of the pipelines (2a, 2b) is arranged in its casing (4a, 4b) in a position which deviates from the centre point of the cross-sectional area of the casing (4a, 4b).

## Revendications

1. Conduite à tubes multiples, en particulier conduite à deux tubes comprenant au moins deux conduites tubulaires (2a, 2b) qui comportent chacune une gaine (4a, 4b) en matière isolante, dans laquelle chacune des gaines (4a, 4b) faites de la matière isolante est entourée, au moins sur une partie de sa longueur et sur toute sa périphérie, d'une couche protectrice souple d'une seule pièce (5a, 5b) et/ou d'une enveloppe protectrice (6a, 6b), et dans laquelle les conduites tubulaires individuelles (2a, 2b) sont assemblées pour former la conduite à tubes multiples au moyen d'une enveloppe extérieure (3) au moins partiellement amovible qui peut être enlevée,
**caractérisée en ce que**
les conduites tubulaires (2a, 2b) sont séparées l'une de l'autre par leur couche protectrice respective (5a, 5b) et/ou par leur enveloppe protectrice respective (6a, 6b) de telle manière que, si l'on ouvre l'enveloppe extérieure (3), les conduites tubulaires (2a, 2b), avec leur gaine respective (4a, 4b) et leur couche protectrice respective (5a, 5b) et/ou leur enveloppe protectrice (6a, 6b), peuvent être séparées en deux conduites tubulaires (2a, 2b) indépendantes l'une de l'autre, qui sont entourées sur toute leur périphérie de leur gaine respective (4a, 4b) et de leur couche protectrice respective (5a, 5b) et/ou de leur enveloppe protectrice respective (6a, 6b), lesquelles conduites pouvant être posées indépendamment l'une de l'autre et **en ce que** les régions des gaines (4a, 4b) qui sont dirigées à chaque fois vers les conduites tubulaires adjacentes (2a, 2b) forment des méplats (7a, 7b), de sorte qu'il est possible d'appliquer les gaines (4a, 4b) l'une contre l'autre, par leurs couches protectrices respectives (5a, 5b) et/ou leurs enveloppes protectrices (6a, 6b) en réalisant une liaison au moins approximativement par complémentarité de forme.

2. Conduite à tubes multiples selon la revendication 1,
**caractérisée en ce que**
la matière isolante est faite de caoutchouc EPDM.

3. Conduite à tubes multiples selon la revendication 1 ou 2,
**caractérisée en ce que**
chacune des gaines (4a, 4b) comporte l'enveloppe protectrice (6a, 6b) sur sa surface dirigée vers l'enveloppe extérieure (3) et/ou vers les gaines adjacentes (4b, 4a).

4. Conduite à tubes multiples selon l'une des revendications 1 à 3,
**caractérisée en ce que**
la couche protectrice (5a, 5b) est en une seule pièce avec la gaine respective (4a, 4b).

5. Conduite à tubes multiples selon la revendication 3,
**caractérisée en ce que**
l'enveloppe protectrice (6a, 6b) est faite d'une matière de polyéthylène (PE).

6. Conduite à tubes multiples selon la revendication 3,
**caractérisée en ce que**
l'enveloppe protectrice (6a, 6b) est faite d'une matière de polychlorure de vinyle (PVC).

7. Conduite à tubes multiples selon la revendication 3,
**caractérisée en ce que**
l'enveloppe protectrice (6a, 6b) est faite d'un tissu de fibres synthétiques et/ou métalliques.

8. Conduite à tubes multiples selon l'une des revendications 1 à 7,
**caractérisée en ce que**
l'enveloppe extérieure (3) est faite d'une matière de polyéthylène (PE).

9. Conduite à tubes multiples selon l'une des revendications 1 à 7,
**caractérisée en ce que**
l'enveloppe extérieure (3) est faite d'une matière de polychlorure de vinyle (PVC).

10. Conduite à tubes multiples selon l'une des revendications 1 à 7,
**caractérisée en ce que**
l'enveloppe extérieure (3) est faite d'un tissu de fibres synthétiques et/ou métalliques.

11. Conduite à tubes multiples selon l'une des revendications 1 à 10,
**caractérisée en ce que**
chacune des gaines (4a, 4b) est formée en une seule pièce, sans joint.

12. Conduite à tubes multiples selon l'une des revendications 1 à 11,
**caractérisée en ce que**
les conduites tubulaires (2a, 2b) sont constituées par des conduites tubulaires flexibles (2a, 2b) connues en soi.

13. Conduite à tubes multiples selon la revendication 12,
**caractérisée en ce que**
les conduites tubulaires flexibles (2a, 2b) sont constituées par des tubes ondulés annelés ou hélicoïdaux.

14. Conduite à tubes multiples selon l'une des revendications 1 à 13,
**caractérisée en ce que**
au moins un câble électrique (8) est intégré dans la zone entre les conduites tubulaires (2a, 2b) et l'enveloppe extérieure (3).

15. Conduite à tubes multiples selon la revendication 14,
**caractérisée en ce que**
au moins un câble électrique (8) est disposé directement sous l'enveloppe extérieure (3).

16. Conduite à tubes multiples selon la revendication 14 ou 15,
**caractérisée en ce que**
des chanfreins (9a, 9b) ou encoches (10, 10') prévus sur au moins une des gaines (4a, 4b) ménagent de la place pour au moins un câble (8).

17. Conduite à tubes multiples selon la revendication 14, 15 ou 16,
**caractérisée en ce que**
le au moins un câble électrique (8) est intégré entre l'une des conduites tubulaires (2a, 2b) et son enveloppe protectrice (6a, 6b).

18. Conduite à tubes multiples selon l'une des revendications 1 à 17,
**caractérisée par**
une forme au moins approximativement ovale.

19. Conduite à tubes multiples selon l'une des revendications 1 à 18,
**caractérisée en ce que**
chacune de gaines (4a, 4b) présente au moins approximativement la forme d'un demi-ovale, le méplat (7a, 7b) étant disposé à chaque fois dans la région dirigée vers l'autre conduite tubulaire (2b, 2a).

20. Conduite à tubes multiples selon l'une des revendications 1 à 17,
**caractérisée en ce que**
chacune des gaines (4a, 4b) est de configuration au moins approximativement rectangulaire.

21. Conduite à tubes multiples selon la revendication 20
**caractérisée en ce que**
au moins une des conduites tubulaires (2a, 2b) est disposée dans sa gaine (4a, 4b) dans une position différente du centre de la surface de section de la gaine (4a, 4b).
